# EUROPÄISCHE PATENTANMELDUNG

(11) **EP 0 953 625 A1**
(43) Veröffentlichungstag der Anmeldung: **03.11.1999**
(21) Anmeldenummer: 99108260.3
(22) Anmeldetag: 27.04.1999
(51) Int. Cl.: C09K 21/14, B65D 83/14

(54) **Verwendung einer Zweikammer-Aerosoldose sowie feuerhemmend ausgerüsteter Montageschaum**

(30) Priorität: 27.04.1998 DE 19818675; 10.08.1998 DE 19836039; 23.12.1998 DE 19859794; 16.04.1999 DE 19917166
(71) Anmelder: Colux Gesellschaft für Licht- und Leichtbau mbH, D-78224 Singen (DE)
(72) Erfinder: Lechner Roland Dr., 78224 Singen (DE)
(74) Vertreter: Hiebsch, Gerhard F., Dipl.-Ing.

(57) **Zusammenfassung**

Eine Zweikammer-Aerosoldose wird zur Handhabung eines feuerhemmend ausgerüsteten Montageschaums eingesetzt, bei der sich in der einen Kammer ein modifiziertes Isocyanurat mit dem Füllstoff befindet und in der anderen Kammer ein Katalysator. Auch kann in die Kammer für modifiziertes Isocyanurat und Füllstoff Stahlkugeln eingelegt sein. Bei dem bevorzugten feuerhemmend ausgerüsteten Montageschaum ist modifiziertem Isocyanurat ein Füllstoff in Form einer Substanz in hoher Konzentration und fein vermahlen zugegeben sowie die Substanz so gestaltet, dass sich bei höherer Temperatur ihr Volumen stark vergrößert.

## Beschreibung

Die Erfindung betrifft die Verwendung einer Zweikammer-Aerosoldose. Zudem erfasst die Erfindung einen feuerhemmend ausgerüsteten Montageschaumm.

Schon seit längerer Zeit kann Polyurethanschaum (PU-Schaum) mit Flammschutzmitteln so ausgerüstet werden, dass er in die Baustoffklasse B2 nach DIN 4102, Teil 2, fällt. Neuerdings ist es auch möglich, die Baustoffklasse B1 nach DIN 4102, Teil 2, zu erreichen. Jedoch konnten die feuerhemmenden Eigenschaften nicht erzielt werden, wie sie beispielsweise zur Abschottung von Kabeldurchführungen durch Brandabschnittswände nötig sind; nach DIN 4102, Teil 9, muss der Baustoff dabei für eine gewisse Zeit -- beispielsweise 90 Minuten -- den Durchtritt von Feuer und Rauch durch das Kabelschott verhindern. Dabei dürfen die Kabel auf der feuerabgewandten Seite um nicht mehr als 180°C heißer werden wie zu Beginn des Versuchs. Während der Versuchsdauer von etwa 90 Minuten wird das Kabelschott mit dem verbauten Baustoff der sogenannten Einheits-Termperaturzeitkurve ausgesetzt, bei der bis zu 1000°C erreicht werden. Polyurethan hält diese Temperatur nicht aus. Es verbrennt und schmilzt bei so hohen Temperaturen, so daß Feuer und Rauch durch das Schott hindurchgehen.

In Kenntnis dieses Standes der Technik hat sich der Erfinder das Ziel gesetzt, einen Montageschaum mit ähnlichen Eigenschaften wie die bekannten PU-Schäume zu entwickeln, der zudem den geschilderten Hitzeeinwirkungen widersteht.

Zur Lösung dieser Aufgabe führt die Lehre der unabhängigen Ansprüche; die Unteransprüche geben günstige Weiterbildungen an.

Erfindungsgemäß wird diese Aufgabe durch die Verwendung einer Zweikammer-Aerosoldose gelöst. Besonders praktisch ist eine Zweikammer-Aerosoldose (ZAD) etwa nach EP-A-0 111 089 zur Abfüllung des IC/Füllstoff-Gemisches. In der Hauptkammer der Aerosoldose befindet sich das modifizierte Isocyanat mit der anorganischen Substanz als Füllstoff und einige Stahlkugeln zum Mischen (A-Komponente). In der Nebenkammer der Aerosoldose lagert ein Katalysator für die schnelle Aushärtung der A-Komponente.

Gemäß dieser bevorzugten Weiterbildung ermöglicht es die o.g. ZAD, das Vermischen der A-Komponente und des Katalysators erst außerhalb des Dosenbehälters durchzuführen, so dass die ZAD auch für Benutzungen zu einem späteren Zeitpunkt wieder verwendbar ist. Insoweit gilt der Offenbarungsgehalt der EP-A-0 111 089 hinsichtlich der konstruktiven Realisierung der ZAD im Hinblick auf die vorliegende, erfindungsgemäße Verwendung als in die vorliegende Offenbarung einbezogen.

Die Zweikammer-Aerosoldose (ZAD) ist auch deshalb bevorzugt heranzuziehen, weil die A-Komponente niederviskos eingestellt werden muss, damit die Füllstoffe nach Lagerung wieder aufgeschüttelt werden können; Füllstoffe setzen sich im Laufe der Zeit am Boden der ZAD ab. Dies hat zur Folge, dass die A-Komponente nach Ausbringen aus der Dose innerhalb weniger Minuten zerläuft. Durch das sehr schnelle Aushärten mit dem Katalysator wird das Zerlaufen verhindert.

Gemäß bevorzugter Weiterbildungen der Erfindung ist vorgesehen, als Montageschaum einen Zwei-Komponenten-Montageschaum einzusetzen, der zumindest die Erfordernisse der Feuerwiderstandsklasse T 30 (gemäß DIN 4102, Teil 5) im Hinblick auf sein Brandverhalten erfüllt. Weiterhin liegt es im Rahmen bevorzugter Weiterbildungen der Erfindung, Füllstoffe mit einem Anteil von zumindest 40 Gew.-% zuzusetzen, da ein derartiger Anteil sich entsprechend vorteilhaft auf das Brandschutzverhalten des Schaumes auswirkt. Weiter bevorzugt ist es zudem, diese Füllstoffe so auszugestalten, dass diese bei steigenden Temperaturen ihr Volumen vergrößern (ein typisches Beispiel ist Ammoniumpolyphosphat, als sog. intumeszierendes Pulver). Auch hierdurch verbessern sich die Brandschutzeigenschaften des erfindungsgemäß vorgesehenen und verwendeten Montageschaums weiter.

Im Rahmen der Erfindung liegt z.B. die folgende Rezeptur:
- 30 bis 34 g: Isocyanat
- 6 bis 10 g: Polyol
- 10 bis 14 g: Trietyhlphosphat
- 1 bis 4 g: Polyether-Polydimethylsiloxan
- 1 bis 4 g: Pyrogene Kieselsäure
- 58 bis 62 g: Ammoniumpolyphosphat

Von dieser Mischung (A-Komponente) werden etwa 290 bis 310 g, bevorzugt etwa 300 g, in die A-Kammer der Zweikammer-Aerosoldose gegeben sowie mit etwa 28 bis 32 g Dimethylether (DME) und etwa 28 bis 32 g 1,1,1,2-Tetrafluorethane (R134a) begast.

Die andere Kammer ist bevorzugt gefüllt mit 24 bis 26 g Katalysator MKA 489® von EniChem und 3 bis 5 g R134a.

Statt der vorstehenden Menge an Ammoniumpolyphosphat können auch nur etwa 28 bis 32 g Ammoniumpolyphosphat zusammen mit einer gleichen Menge Aluminiumhydroxid eingesetzt werden.

Die folgende Rezeptur im Rahmen der Erfindung ist bei einer Füllung der einen Kammer als A-Komponente (z.B. etwa 300 g) weiterbildungsgemäß besonders brauchbar:
- 32 g: Isocyanat
- 8 g: Polyol
- 12 g: Triethylphosphat
- 2 g: Polyether-Polydimethylsiloxan
- 2 g: Pyrogene Kieselsäure
- 60 g: Ammoniumpolyphosphat.

Anstatt 60 g Ammoniumpolyphosphat können auch 30 g Ammoniumpolyphosphat und 30 g Aluminiumhydroxid verwendet werden. Hier erfolgt die Begasung mit 30,5 g Dimethylether und 30,5 g 1,1,1,2-Tetrafluorethane.

Die zugeordnete andere Kammer soll bevorzugt gefüllt sein mit 25 g Katalysator MKA 489® von EniChem sowie mit 4 g R134a.

Als günstig hat sich auch eine weitere Ausführungsform der Erfindung erwiesen mit einer A-Komponente (etwa 300 g):
- 27,6 Gew.-%: Isocyanat
- 6,9 Gew.-%: Polyol
- 10,3 Gew.-%: Triethylphosphat
- 1,7 Gew.-%: Polyether-Polydimethylsiloxan
- 1,7 Gew.-%: Pyrogene Kieselsäure
- 51,7 Gew.-%: Ammoniumpolyphosphat.

Hier können statt der 51,7 Gew.-% Ammoniumpolyphosphat auch 25,85 Gew.-% Ammoniumpolyphosphat sowie 25,85 Gew.-% Aluminiumhydroxid verwendet werden.

Von dieser vorstehenden Mischung werden 83 bis 85 Gew.-%, bevorzugt 84,2 Gew.-%, in die A-Kammer der Zweikammer-Aerosoldose gegeben und weiter bevorzugt mit etwa 7 bis 8,5 Gew.-%, insbesondere mit 7,9 Gew.-% Dimethylether (DME) und mit etwa 7 bis 8,5 Gew.-%, insbesondere mit 7,9 Gew.-% 1,1,1,2-Tetrafluorethane (R134a) begast.

Als B-Komponente (d.h. Füllung der anderen Kammer) wird eine Mischung eingesetzt aus:
- 86,2 Gew.-%: Katalysator MKA 489® von EniChem
- 13,8 Gew.-%: R134a.

Schließlich kann bei einer anderen Ausgestaltung auch die nachstehende Zusammensetzung gewählt werden:

### A-Komponente (Füllung mit etwa 160g):

- 48 g: Isocyanat
- 12 g: Polyol
- 15 g: Triethylphosphat
- 60 g: Aluminiumhydroxid
- 60 g: Ammoniumpolyphosphat
- 2 g: Polyether-Polydimethylsiloxan.

Von dieser Mischung werden 160 g in die A-Kammer der ZAD gegeben und mit 10 g Dimethylether (DME) und 20 g 1,1,1,2-Tetrafluorethane (R134a) begast.

### Bevorzugte B-Komponente (Füllung der anderen Kammer):

- 5,4 g: Katalysator MKA 442® von EniChem.
- 10,6 g: Polyol
- 4 g: R134a.

Zur besseren Handhabung hat es sich als günstig erwiesen, das modifizierte IC in Aerosoldosen oder Kartuschen -- z.B. nach US-A-4,767,026 -- zu verpacken. Es spielt dabei keine Rolle, ob ein einkomponentiges modifiziertes IC als Trägersubstanz oder ein zweikomponentiges verwendet wird.

Vorteilhafterweise wird eine Substanz -- bevorzugt eine anorganische Substanz wie beispielsweise ein Silikat oder Ammoniumpolyphosphat oder das Mittel PALUSOL® der BASF --in hoher Konzentration und fein vermahlen zu einem Urethan modifizierten Isocyanurat (IC) -- ein Derivat der Isocyanursäure -- zugegeben. Der Füllstoff muss dabei die Eigenschaft besitzen, dass er bei höherer Temperatur sein Volumen stark vergrößert. Im Brandfall verliert das modifizierte Isocyanurat (IC) durch den Verbrennungsvorgang an Volumen. Der Verlust wird durch die Volumenzunahme des Füllstoffes ausgeglichen, so dass das Ursprungsvolumen erhalten bleibt. Die Folge dieses Vorganges ist, dass beispielsweise bei Anwendung in einem Kabelschott dieses verschlossen bleibt.

Nach einem weiteren Merkmal der Erfindung kann der so modifizierte IC-Schaum auch dazu verwendet werden, mit ihm z.B. Türzargen von Bandschutztüren zu befüllen.

Weitere Vorteile, Merkmale und Einzelheiten der Erfindung ergeben sich aus der nachfolgenden Beschreibung bevorzugter Ausführungsbeispiele sowie anhand der Zeichnungen; in dieser zeigen
- Fig. 1:: einen Längsschnitt durch eine Zweikammerdose mit gemeinsamem Auslass für zwei Komponenten;
- Fig. 2:: skizzenhafte Längsschnitte durch zwei andere Dosen;
- Fig. 3:: die Stirnansicht einer Kabeldurchführung.

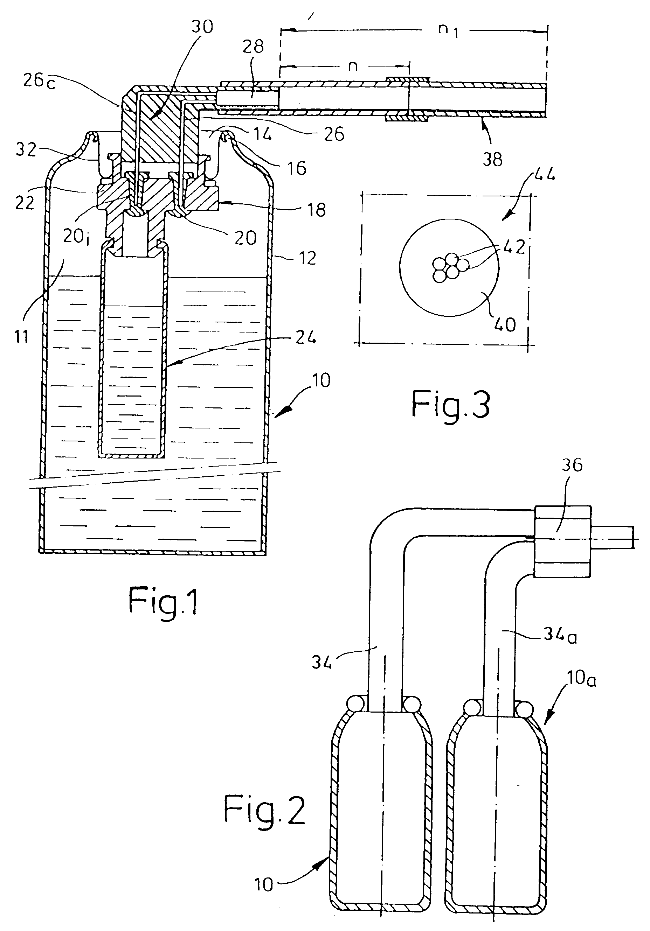

Ein Druckbehälter 10 weist am oberen Ende seiner zylindrischen Wandung 12 eine Firstöffnung 14 auf, die von einem ringartigen Randwulst 16 umgeben ist. In die Firstöffnung 14 ist eine Ventilhalterung 18 für zwei Ventile 20, 20ᵢ eingesetzt, die in einer gemeinsamen Ventilplatte 22 lagern. Das in Fig. 1 rechte Ventil 20 ist dem Innenraum 11 des Druckbehälters 10 zugeordnet; das andere Ventil 20ᵢ liegt zentrisch über einer unter ihm aufgehängten Innenbehälter 24. Von jedem der Ventile 20, 20ᵢ führt ein Auslasskanal 26, 26ᵢ zu einem Auslassstutzen 28, der Teil eines Betätigungselementes 30 für die Ventile 20, 20ᵢ ist.

Die Ventilgruppe 20, 20ᵢ ist mit ihrer gemeinsamen Ventilplatte 22 in einen Dichtkragen 32 eingesetzt, der seinerseits am Randwulst 16 in die Firstöffnung 14 eingehängt ist.

Nicht dargestellt ist eine Kombination von Druckbehälter 10 und Innenbehälter 24, welch letzterer zerstört wird, um eine Mischung beider Komponenten im Druckbehälter 10 durchzuführen.

Bei der skizzenhaft dargestellten Einheit aus zwei parallelen Druckbehältern 10, 10ₐ der Fig. 2 führen getrennte Komponentenleitungen 34, 34ₐ zu einem gemeinsamen Mischkopf 36, in dem die Mischung der beiden Komponenten erfolgt.

Die beiden in der Beschreibungseinleitung genannten Komponenten werden durch ein Austragsrohr 38 wählbarer Länge n oder n₁ ausgetragen.

Beispielsweise lässt sich mit dieser Mischung der freibleibende Querschnitt einer Durchführung 40 für Kabel 42 in einer Gebäudewand 44 problemlos schließen.

## Patentansprüche

1. Verwendung einer Zweikammer-Aerosoldose zur Handhabung eines feuerhemmend ausgerüsteten Montageschaums, bei der sich in der einen Kammer der Zweikammer-Aerosoldose ein modifiziertes Isocyanat mit dem Füllstoff befindet und in der anderen Kammer ein Katalysator.

2. Verwendung nach Anspruch 1, dadurch gekennzeichnet, dass in die eine Kammer für modifiziertes Isocyanat und Füllstoff Stahlkugeln eingelegt sind.

3. Verwendung nach Anspruch 1 oder 2, dadurch gekennzeichnet, dass der Montageschaum als Zwei-Komponenten-Montageschaum mit einer Feuerwiderstandsverhalten von zumindest der Feuerwiderstandsklasse T30 (DIN 4102, Teil 5) ausgebildet ist.

4. Verwendung nach einem der Ansprüche 1 bis 3, dadurch gekennzeichnet, dass der Füllstoff mit einem Anteil von zumindest 40 Gew.-% in der einen Kammer vorgesehen ist.

5. Verwendung nach einem der Ansprüche 1 bis 4, dadurch gekennzeichnet, dass die Füllstoffe so ausgebildet sind, dass diese bei steigenden Temperaturen eine Vergrößerung ihres Volumens erfahren.

6. Feuerhemmend ausgerüsteter Montageschaum, insbesondere zur Verwendung nach einem der Ansprüche 1 bis 5 und insbesondere als Zwei-Komponenten-Montageschaum mindestens der Feuerwiderstandsklasse T 30 (DIN 4102, Teil 5) ausgebildet, dadurch gekennzeichnet, dass modifiziertem Isocyanurat ein Füllstoff in Form einer Substanz in hoher Konzentration und fein vermahlen zugegeben sowie die Substanz so gestaltet ist, dass sich bei höherer Temperatur ihr Volumen stark vergrößert.

7. Montageschaum nach Anspruch 6, gekennzeichnet durch eine anorganische Substanz als Füllstoff, die weiter bevorzugt dem Isocyanat mit mindestens 40 Gew.-% zugegeben ist.

8. Montageschaum nach Anspruch 6 oder 7, dadurch gekennzeichnet, dass der Füllstoff ein intumeszierendes Pulver, insbesondere Silikat oder ein Ammoniumpolyphosphat, ist.

9. Verwendung der Zweikammer-Aerosoldose bzw. des Montageschaums nach einem der Ansprüche 1 bis 5 bzw. 6 bis 8 bei Kabeldurchführungen.

10. Verwendung der Zweikammer-Aerosoldose nach einem der Ansprüche 1 bis 5, zum Befüllen von Brandschutztüren od. dgl. Brandschutzflächen, oder von Einbauräumen für diese.

11. Verwendung des Montageschaums nach einem der Ansprüche 6 bis 8 als Füllung von Brandschutztüren od. dgl. Brandschutzflächen, oder von Einbauräumen für diese.
